# EUROPÄISCHE PATENTSCHRIFT

(11) **EP 1 053 516 B1**
(45) Veröffentlichungstag und Bekanntmachung des Hinweises auf die Patenterteilung: **29.08.2001**
(21) Anmeldenummer: 99907308.3
(22) Anmeldetag: 03.02.1999
(51) Int. Cl.: G05D 1/02, B25J 9/16

(54) **BAHNPLANUNGSVERFAHREN FÜR EINE MOBILE EINHEIT ZUR FLÄCHENBEARBEITUNG**
PATH PLANNING PROCESS FOR A MOBILE SURFACE TREATMENT UNIT
PROCEDE DE PLANIFICATION DE PARCOURS DESTINE A UNE UNITE DE TRAITEMENT DE SURFACE MOBILE

(30) Priorität: 03.02.1998 DE 19804195
(43) Veröffentlichungstag der Anmeldung: 22.11.2000
(73) Patentinhaber: SIEMENS AKTIENGESELLSCHAFT, 80333 München (DE)
(72) Erfinder: FIEGERT, Michael, D-81739 München (DE); HELBACH, Jörg, D-72525 Münsingen (DE); LAWITZKY, Gisbert, D-81477 München (DE)
(86) Internationale Anmeldenummer: DE9900286
(87) Internationale Veröffentlichungsnummer: WO9940496

(56) Entgegenhaltungen:
- EP-A- 0 335 975
- EP-A- 0 402 764
- EP-A- 0 564 854
- US-A- 4 700 427
- US-A- 4 706 200
- US-A- 5 602 748

## Beschreibung

Die Erfindung bezieht sich auf ein Verfahren, mit dem eine mobile Einheit auf einer mit Hindernissen verstellten Arbeitsfläche so gesteuert werden kann, daß ein an ihr angebrachtes Arbeitsgerät die verbleibende Fläche möglichst vollständig überstreicht. Ein solches Verfahren ist z.B. aus der EP-A-0 402 764 bekannt.

Immer häufiger werden sich wiederholende Tätigkeiten Servicerobotern übertragen. Beispiele für solche Tätigkeiten sind Reinigungsaufgaben, Transportaufgaben, das Ausbringen von Saatgut, oder beispielsweise das Rasenmähen. Bei Servicerobotern, an welchen Flächenbearbeitungsgeräte angebracht sind besteht das Problem, daß dieses Flächenbearbeitungsgerät möglichst den ganzen zur Verfügung stehenden Raum überstreichen soll, wobei möglichst wenig Wege doppelt gefahren werden sollen. Dabei soll auch der Aufwand für die Planung dieser Bahn so gering sein, daß wenig Rechenkapazität dafür verwendet werden muß, damit ein akzeptables Zeitverhalten beim Planungsvorgang sichergestellt werden kann. Bei einem Reinigungsroboter, der. beispielsweise in einem Supermarkt Reinigungsaufgaben durchführen soll, besteht das zusätzliche Problem darin, daß falls er während der Öffnungszeiten eingesetzt wird, zusätzliche Hindernisse in Form von Kunden mit Einkaufswagen auftreten und daß die.vom Roboter gefahrene Bahn so vorhersehbar sein sollte, daß die Kunden durch den reinigenden Roboter nicht erschreckt werden. Für den Fall, daß die Abmessungen des Arbeitsbereiches und die darin vorhandenen Hindernisse in ihrer Lage bekannt sind, kann mit Hilfe eines Vorabverfahrens eine optimale Bahn geplant werden, deren Abfahren wenig Zeit kostet und die dabei möglichst viel von der zu überfahrenden Fläche berücksichtigt. Im Stand der Technik sind zwar schon Bahnplanungsverfahren für autonome mobile Einheiten bekannt, jedoch das Thema des Planens von flächenfüllenden Bahnen ist bisher dort nur ansatzweise diskutiert worden: "Path Planning And Guidance Techniques For An Autonomous Mobile Cleaning Robot" von Christian Hofner und Günther Schmidt veröffentlicht in Proceedings zu den Intelligent Robots and Systems IROS '94, München am 12. bis 16.09.1994, Seite 610 bis 617.

Die der Erfindung zugrundeliegende Aufgabe besteht darin, ein verbessertes Bahnplanungsverfahren für eine mobile Einheit zur Flächenbearbeitung anzugeben.

Diese Aufgabe wird gemäß den Merkmalen des Patentanspruches 1 gelöst. Weiterbildungen der Erfindungen ergeben sich aus den abhängigen Ansprüchen.

Vorteilhaft wird bei Anwendung des erfindungsgemäßen Verfahrens auf die Breite des Arbeitsgerätes abgestellt, so daß eine geringe Anzahl von potentiellen Bahnen vorgegeben wird, welche vorteilhaft durch Manövriermarken in potentielle Teilbahnstücke unterteilt werden, die vorzugsweise so angeordnet sind, daß die mobile Einheit anhand ihre kinematischen Gegebenheiten problemlos in der Lage ist von einer Manövriermarke zur nächsten Manövriermarke zu gelangen. Auf diese Weise wird eine möglichst geringe Anzahl von potentiellen Teilbahnstükken vorgegeben, die durch einen Bewertungsvorgang zu bewerten sind und demgemäß einen möglichst geringen Rechenaufwand verursachen.

Vorteilhaft wird bei einer Weiterbildung des Verfahrens die Arbeitsfläche in Form eines Rasters aufgeteilt, wobei die Rasterfläche vermerkt wird, ob diese von einem Teilbahnstück das zu planen ist durchquert wird, woraus geschlossen werden kann, ob dieser Flächenbereich bereits gereinigt wurde. Das führt dazu, daß die Kostenfunktion zur Bewertung der jeweiligen Teilbahnstücke an diesen Sachverhalt angepaßt werden kann.

Vorzugsweise wird bei einer Weiterbildung des vorgeschlagenen Verfahrens vor der Planung einer potentiellen Bahn überprüft, ob diese einen Mindestabstand zu weiteren Umrißlinien einhält, da auf diese Weise vermieden wird, daß unnötige potentielle Teilbahnen erzeugt werden, weil von anderen Umrißlinien ausgehend ebenfalls solche potentiellen Teilbahnen erzeugt werden. Auf diese Weise wird der Rechenaufwand bei der Planung und Bewertung der Bahn, welche von der mobilen Einheit gefahren werden soll reduziert.

Vorteilhaft wird bei einer Weiterbildung des vorgeschlagenen Verfahrens solange mit der Erzeugung von potentiellen Bahnen fortgefahren, bis ein Abstandskriterium zu einer Umrißlinie unterschritten wird, da auf diese Weise sichergestellt wird, daß die gesamte verbleibende Arbeitsfläche von potentiellen Bahnen durchdrungen wird und gleichzeitig sichergestellt wird, daß nicht zu viele potentielle Bahnen erzeugt werden.

Vorteilhaft ist bei einer Weiterbildung des vorgeschlagenen Verfahrens den einzelnen Teilbahnen eine Richtung vorgegeben, da auf diese Weise sichergestellt werden kann, daß seitlich an einer mobilen Einheit angeordnete Flächenbearbeitungsgeräte entlang der Umrißlinie geführt werden können.

Vorteilhaft kann in einer Weiterbildung des vorgeschlagenen Verfahrens eine potentielle Bahn und potentielle Teilbahnstücke dadurch erzeugt werden, daß die Linienstücke der Umrißlinie einfach senkrecht um den Betrag der Breite des Flächenbearbeitungsgerätes verschoben werden und die Endpunkte dieser so entstandenen Teilbahnstücke mittels weiterer Teilbahnstücke verbunden werden. Dieses Verfahren ist einfach zu programmieren und erzeugt auf einfache Art potentielle Teilbahnen und potentielle Bahnen mit Manövriermarken, die von einer mobilen Einheit leicht abgefahren werden können.

Vorteilhaft lassen sich bei einer Weiterbildung des vorgeschlagenen Verfahrens die Teilbahn in Form von Kanten und die Manövriermarken als Knoten eines Graphen darstellen, so lassen sich graphentheoretische Grundlagen nutzen. Dort sind bereits verschiedenste Möglichkeiten zum Aufbau optimaler Graphen und zur Bewertung einzelner Kanten dieser Graphen vorhanden.

Vorteilhaft wird die von der mobilen Einheit zu fahrende Bahn durch bewertete Tiefensuche der Kanten des Graphen durchgeführt, da hierbei mittels geringen Rechenaufwandes und somit auch durch kleine Rechner ausführbar, gute Bahnverläufe gefunden werden können.

Vorteilhaft werden die Manövriermarken in Form von Konfigurationen der mobilen Einheit als Koordinate plus Richtung dargestellt, wobei immer derselbe Referenzpunkt an der mobilen Einheit Verwendung findet.

Im folgenden werden Ausführungsbeispiele der Erfindung anhand von Figuren weiter erläutert.

Dabei zeigen die Figuren
- 1:: eine Konfiguration einer mobilen Einheit
- 2 und 3:: eine mobile Einheit mit Hindernis
- 4 bis 6:: den Aufbau von potentiellen Bahnen
- 7:: die Verwendung von Metakanten
- 8:: die kinematische Distanz.

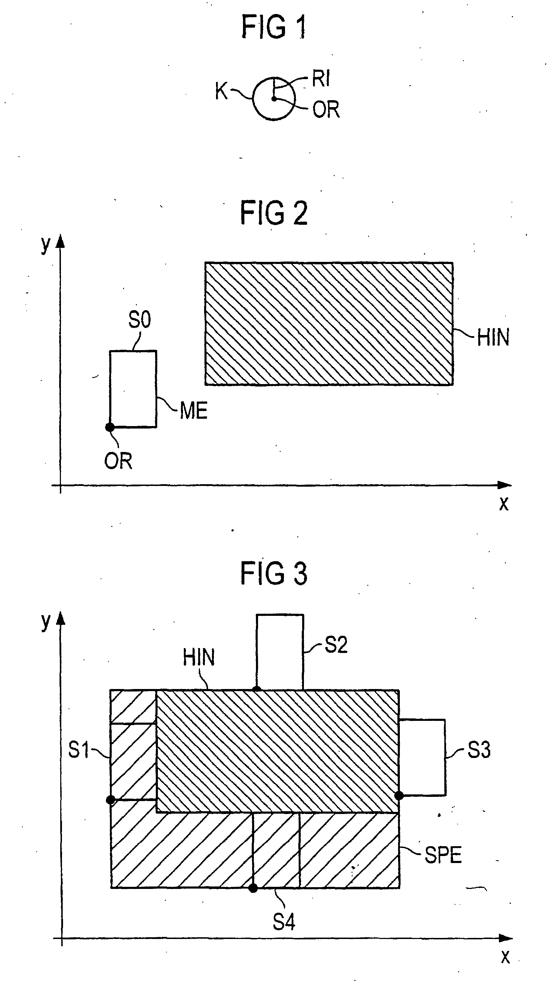

Wie Figur 1 zeigt, kann eine Konfiguration K einer autonomen mobilen Einheit mittels eines Ursprungs OR und einer Richtung RI angegeben werden, wobei der Ursprung in Form von kartesischen Koordinaten angegeben wird. Da in der Regel mobile Einheiten nicht beliebig bewegbar sind, das heißt sie sind nicht um ihre Hochachse drehbar, bzw. können nicht seitwärts fahren, gibt es Mindestkriterien, welche bezüglich der Manövrierbarkeit von mobilen Einheiten beachtet werden müssen. Figuren 2 und 3 veranschaulichen dabei, wie eine einzelne Referenzmarke in Form eines Ursprungs OR einer Konfiguration an einer mobilen Einheit ME verwendet werden kann, wobei gleichzeitig sichergestellt ist, daß ein Flächenbearbeitungsgerät, was an der Einheit angebracht ist, vollständig entlang einer Hindernisumrißlinie HIN geführt werden kann. Figur 2 zeigt dabei die Hindernisumrißlinie HIN, die mobile Einheit ME deren Konfigurationsursprung OR in einem kartesischen Koordinatensystem. In Figur 3 ist eine Hindernisumrißlinie. SPE veranschaulicht, entlang deren der Ursprung der mobilen Einheit ME geführt werden kann, ohne daß diese mit der Hindernisumrißlinie HIN kollidiert. Hierzu sind vier verschiedene Bewegungsstadien der mobilen Einheit ME in Form von S1 bis S4 dargestellt. Die Bezeichnungen ME und OR sind nicht angegeben, sind jedoch mit denen im Zustand S0 identisch. Bei Anwendung des vorgeschlagenen Verfahrens ist es also sinnvoll, wenn lediglich mit einem Koordinatenreferenzpunkt für die Konfiguration der mobilen Einheit gearbeitet wird, anstatt der Hindernisumrißlinie HIN die Hindernisumrißlinie SPE zu verwenden, da dadurch eine Kollision der mobilen Einheit mit einem Hindernis automatisch ausgeschlossen wird.

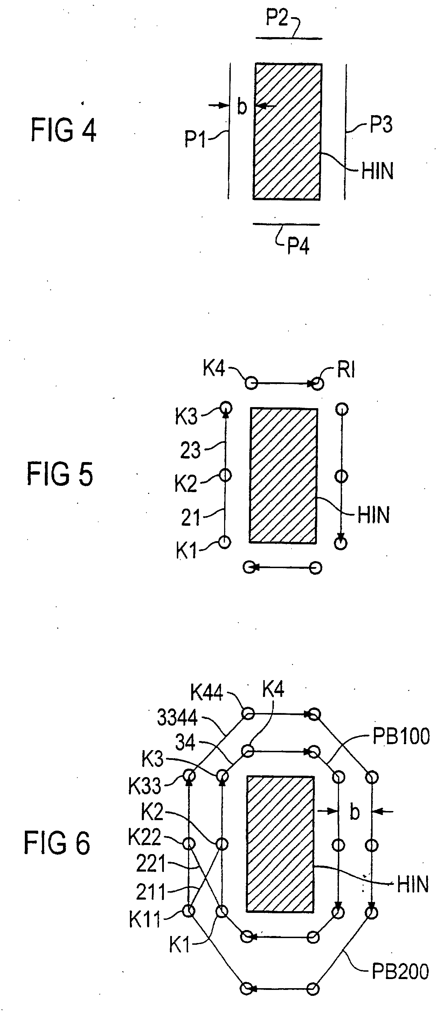

Wie die Figuren 4 bis 6 zeigen, können potentielle Bahnen, welche von der mobilen Einheit abgefahren werden sollen nach einem einfachen Schema aufgebaut werden. Zunächst, wie Figur 4 zeigt, werden die Linienstücke der Hindernisumrißlinie HIN senkrecht um den Betrag der Breite des Flächenarbeitsgerätes verschoben, woraus parallele Linienstücke P1 bis P4 entstehen. Dabei wird die Länge der Linienstücke beibehalten und der Betrag b der Bearbeitungsbreite vorzugsweise so gewählt, daß auch ein gewünschter Überlapp von Bearbeitungsbahnen dabei berücksichtigt wird. Wie Figur 5 weiter zeigt, werden am Ende dieser Linienstücke Konfigurationen K1, K3 und K4 erzeugt. Beispielsweise können diese Konfigurationen Knoten eines Graphen sein und als Manövriermarken für die mobile Einheit dienen, wahlweise kann es auch vorgesehen sein, daß Zwischenkonfigurationen, wie hier mit K2 angedeutet, vergeben sind, um der mobilen Einheit eine genügende Anzahl von Manövriermarken zur Verfügung zu stellen, damit diese nicht zu weit von einem vorgegebenen Weg abweicht. In Figur 5 entstehen auf diese Weise zwischen den Knoten K1 und K2 Kanten 21 und zwischen K2 und K3 Kanten 23. Ebenfalls ist durch einen Pfeil eine Richtung RI angedeutet, in welcher die mobile Einheit vorzugsweise die Hindernisumrißlinie HIN umfahren soll.

Figur 6 zeigt einen weiteren Schritt beim Aufbau potentieller Bahnen, für das vorgeschlagene Bahnplanungsverfahren. Diese Potentiellen Bahnen werden nach Art konzentrischer Kreise um die Hindernisse herum angelegt und durchnummeriert. Zweibeispiele in Figur 6 sind PB100 und PB200. Der Übersichtlichkeit halber sind hier lediglich noch die Knoten K1 und K4 der Bahn aus Figur 5 dargestellt und weitere Knoten Kll bis K44 einer zweiten potentiellen Bahn erzeugt worden. Wie erkannt werden kann, ist diese ebenfalls durch Verschiebung der Linienstücke der ursprünglichen Hindernisumrißlinie um den Betrag der Bearbeitungsbreite b senkrecht zur ersten potentiellen Bahn erzeugt worden. Vorzugsweise wird für jede potentielle Bahn bei dem vorgeschlagenen Verfahren eine Nummer vergeben, damit sichergestellt werden kann, daß einzelne Konfigurationen bzw. Knoten des entstandenen Graphen durch Kanten zwischen den potentiellen Bahnen mit unterschiedlicher Numerierung verbunden werden können. Die zweite potentielle Bahn in Figur 6 weist beispielsweise Konfigurationen K11, K22, K33 und K44 auf, welche beispielsweise durch Teilbahnstücke oder Kanten eines Graphen verbunden sind, wie hier zwischen den Knoten K33 und K44 mit 3344 gezeigt. Die Kante bzw. das Teilbahnstück 3344, je nachdem, ob man eine potentielle Bahn oder einen Graphen betrachtet, verbindet jene Teilbahnstücke, die ursprünglich an der Hindernisumrißlinie HIN an einer Knickstelle aufeinander trafen. Ebenso wie hier dargestellt, können ausgehend von einer Hindernisumrißlinie als Begrenzung der Arbeitsfläche potentielle Bahnen erzeugt werden. Vorzugsweise wird mit dieser Verfahrensweise solange fortgefahren, bis eine potentielle Bahn den Bearbeitungsabstand zu einer weiteren Hindernisumrißlinie unterschreitet, da auf diese Weise sichergestellt wird, daß optimal viele potentielle Bahnen erzeugt werden und die gesamte Arbeitsfläche von solchen potentiellen Bahnen mit ihren Teilbahnstücken durchdrungen wird. Die Auffassung dieser Teilbahnstücke und der Konfigurationen als Knoten und Kanten eines Graphen hat dabei den Vorteil, daß es in der mathematischen Graphentheorie bereits verschiedenste Verfahren gibt, um optimale Graphen zu erzeugen, bzw. Kanten von Graphen hinsichtlich verschiedener Bewertungsfunktionen zu bewerten. Um die so erzeugten potentiellen Bahnen miteinander zu verbinden, ist es erforderlich, potentielle Bahnen mit unterschiedlicher Numerierung durch Teilbahnstücke zwischen einzelnen Knoten zu verbinden. Dies ist hier dargestellt durch die Teilbahnstücke bzw. Kanten 221 bzw. 211. Hinsichtlich der Erzeugung dieser Verbindungsteilbahnen zwischen den potentiellen Bahnen mit unterschiedlicher Nummer sind unterschiedlichste Kriterien denkbar, mit denen gesteuert werden kann, welche Knoten untereinander verbunden werden sollen. Beispielsweise können dieses Abstandskriterien sein, bei dem der euklidische Abstand, bzw. der kinematische Abstand berechnet wird und für diesen ein Schwellenwert vorgegeben wird. Es können aber auch Kombinationen möglich sein, bei denen beispielsweise ein Kriterium eine Rolle spielt, das die mobile Einheit den nächsten Knoten bzw. die nächste Manövriermarke mittels Geradeausfahrt erreichen können soll. Weiterhin können beispielsweise von der Maschine fahrbare Mindestradien bei der Bewertung erzeugbarer Verbindungslinien zwischen einzelnen Konfigurationen eine Rolle spielen. Nachdem diese Vorgehensweise so sukzessive für die gesamte Arbeitsfläche beibehalten wurde, erhält man eine Arbeitsfläche, die von potentiellen Bahnen durchdrungen ist, wobei diese potentiellen Bahnen in potentielle Teilbahnen aufgeteilt sind welche Konfigurationen bzw. Knoten eines Graphen untereinander verbinden. Weiterhin ist durch eine verschiedene Numerierung einzelner potentieller Bahnen sichergestellt, daß all diese potentiellen Bahnen mit Hilfe von potentiellen Teilbahnen untereinander verbunden sind, so daß alle potentiellen Bahnen, die von unterschiedlichen Hindernisumrißlinien ausgehen miteinander verbunden sind. Für das Bahnplanungsverfahren der optimalen Bahnen für das Flächenbearbeitungsgerät stehen also am Schluß lauter Teilbahnen zur Verfügung, aus denen hinsichtlich bestimmter zu erfüllender Bewertungskriterien die optimalen ausgewählt werden können, um eine endgültige Bahn für die mobile Einheit zu planen. Bei der Planung dieser Bahn sind dabei im einzelnen unterschiedlichste Bewertungskriterien zu berücksichtigen, wie beispielsweise die Bewegungsrichtung der Kunden, der Überlapp zwischen den einzelnen potentiellen Bahnen, der Tatsache, daß möglichst wenig Fläche doppelt überfahren werden soll, die Tatsache, daß schöne Bahnen und verständliche Bahnen gefahren werden sollen, welche Kunden in einem Supermarkt nicht stören, der Kurvenradius der mobilen Einheit beachtet werden sollte und die Mindestbreite zur Durchfahrt eine Rolle spielen kann.

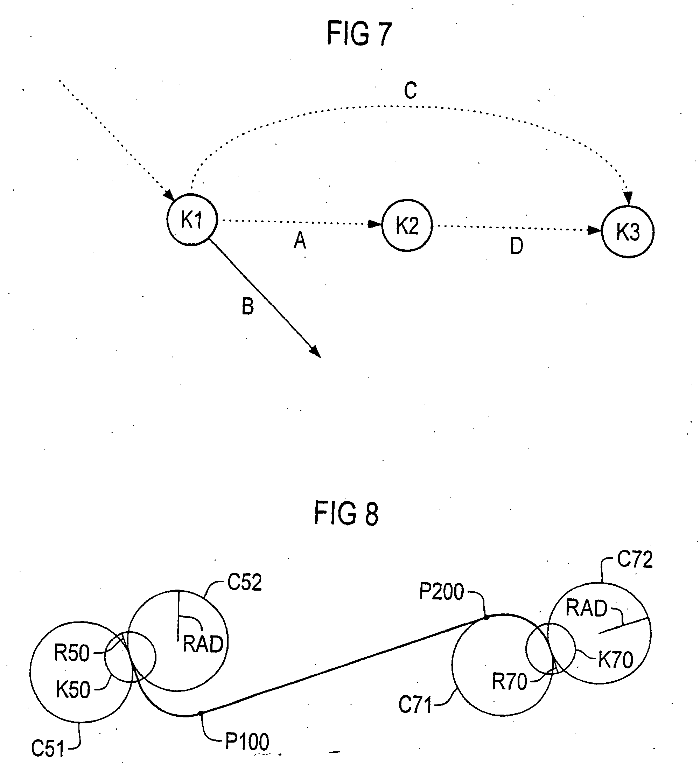

Bevorzugt wird bei der zu planenden Bahn von einer Startmarke ausgegangen, hierzu kann eine beliebige Startmarke innerhalb der Bearbeitungsfläche definiert werden, oder aber eine Konfiguration, die bei der Bahnplanung erzeugt wurde, kann als Startmarke für den Beginn der Bahnplanung dienen. Bevorzugt kann die zur Verfügung stehende Arbeitsfläche durch ein Raster unterteilt werden, wobei für die jeweilige Rasterfläche vermerkt wird, daß diese von einer Teilbahn geschnitten wird, da damit klar ist, falls diese Teilbahn befahren wird, daß die jeweilige Rasterfläche schon gereinigt wurde. Dieser Sachverhalt kann dann dazu dienen, daß weitere Bahnverläufe in Abhängigkeit bereits überfahrener Rasterzellen neu geplant werden. Bzw. daß der weitere Bahnverlauf in Abhängigkeit bereits gereinigter Rasterflächen neu bewertet wird. Einen weiteren Bewertungsfaktor stellt die Länge der geplanten Bahn dar. Eine sinnvolle Möglichkeit die Bahn zu speichern liefert die Verwendung eines gerichteten Graphen. Die gerichteten Kanten dieses Graphen stellen die Verbindung zweier Konfigurationen dar. Zusatzinformationen wie Kosten können dabei sehr leicht hinzugefügt werden. Die Verwendung einer Graphenstruktur hat den Vorteil, daß weniger Speicherplatz benötigt wird. Zur Bewertung der einzelnen Kanten bei der Planung der Bahn kann beispielsweise die Belegung bzw. die Kennzeichnung daß eine Rasterfläche bereits gereinigt wurde in einem Array erfolgen. Ein wesentliches Kriterium bei der Bewertung von Teilbahnen bzw. Graphenkanten, die zwei potentielle Bahnen quer zueinander verbinden, kann darin bestehen, daß die mobile Einheit leicht von einer Konfiguration auf der einen potentiellen Bahn in die andere Konfiguration auf der anderen potentiellen Bahn überwechseln kann. Bevorzugt können bei dem vorgeschlagenen Verfahren auch erzeugte Konfigurationen wieder gelöscht werden, falls diese zu nahe an einer weiteren Hindernisumrißlinie liegen. Weiterhin können Konfigurationen gelöscht werden, die hinsichtlich der Kinematik der mobilen Einheit eine störende Auswirkung haben. Dies können vorzugsweise solche Konfigurationen sein, die innerhalb eines minimalen Kurvenradiuses der mobilen Einheit liegen. Weiterhin können solche Konfigurationen gelöscht werden, von denen keine weitere Teilbahn abgeht, da vermieden werden soll, daß die mobile Einheit in einer Sackgasse steht und rückwärts fahren muß. Nachdem nun potentielle Teilbahnen erzeugt wurden, wird mit Hilfe eines Suchalgorithmus, der beispielsweise der Greedy-Algorithmus oder der bewertete Tiefensuchalgorithmus ist, jede einzelne Kante bewertet, wobei die Kriterien für die Bewertung der jeweiligen Kanten der Teilbahnen frei vorgebbar' sind. Experimentell wurde eine Bewertung der Teilbahnen bzw. Kanten des Graphen bei einer Tiefensuche mit einer Suchtiefe von 6 durchgeführt. Mit dieser Vorgehensweise wird der Zeitaufwand für die Bewertung erheblich reduziert. Allerdings verliert die Bahn auch an Optimalität, da der Fall auftreten kann, daß die Kanten innerhalb einer spezifizierten Suchtiefe bereits alle gereinigt sind, so daß mit Hilfe des Tiefensuchalgorithmus keine Bahn gefunden werden kann, die zu einer ungereinigten Kante führt. Diese Vorgehensweise impliziert auch, daß neben der Markierung von Rasterflächen die gereinigt worden sind auch die jeweiligen Bahnstücke hinsichtlich der Tatsache, daß sie bereits befahren wurden, markiert werden können, was auch in einem Speicher der mobilen Einheit bzw. des Planungsrechners vermerkt werden kann. Um zu verhindern, daß am Ende durch die Bewertung einzelner Graphenkanten mit Hilfe eines Tiefensuchalgorithmus Teilflächen des Bearbeitungsbereiches übrigbleiben, welche nicht gereinigt wurden, weil die Schrittweite des Tiefensuchalgorithmus nicht ausreicht, um über einzelne Kanten dahinein zu gelangen, wird eine Vorgehensweise mit Hilfe mit Metakanten verwendet, die wie folgt in Figur 7 weiter erläutert wird. Mittels dieses Metakantenkonzeptes soll die Suchtiefe für den Tiefensuchalgorithmus verringert werden, indem bereits gereinigte Kanten zu einer Metakante zusammengefaßt werden. Hierzu wird beispielsweise eine Mehrzahl von ungereinigten Kanten, die nacheinander überfahren wird, zu einer einzigen Metakante zusammengefaßt.

Falls eine ungereinigte Kante überfahren wird, so wird diese Kante in eine Metakante umgewandelt. Im Anschluß wird ein Algorithmus durchlaufen, dessen Graph der Metakanten erneuert. Hierzu wird dieser Algorithmus je einmal für den Start und den Endknoten der soeben überfahrenen Kante durchlaufen. Zunächst wird überprüft, ob eine noch ungereinigte Kante aus dem jeweiligen Knoten herausführt. Ist dies der Fall, so erfolgt keine Aktion. Ist dies nicht der Fall, so werden alle eingehenden Metakanten mit allen ausgehenden Metakanten verknüpft und zusätzlich alle eingehenden Metakanten gelöscht, so daß der entsprechende Knoten nun übersprungen werden kann. Dieser Sachverhalt wird in Figur 7 verdeutlicht. Hier wird die aktuell gefahrene Kante A in eine Metakante umgewandelt. Anschließend wird Knoten K₁ überprüft. Da die Kante B die von diesem Knoten abgeht, noch ungereinigt ist, wird an dieser Stelle nichts getan. Im Anschluß wird der Knoten K₂ überprüft. Dieser Knoten enthält keine ungereinigte Kante mehr, sondern nur noch die Metakante D. Das heißt, alle eingehenden Metakanten werden mit allen ausgehenden Metakanten gemäß des Algorithmus verknüpft. In diesem Fall wird also die Kante A mit der Kante D verbunden und es entsteht die neue Metakante C. In einem nächsten Schritt wird nun noch die Kante A gelöscht, so daß der Knoten K₂ übersprungen werden kann. Der Vollständigkeit halber wird noch ausgeführt, daß die Metakanten in Figur 7 mit Hilfe bestehender Linien dargestellt sind. Durch diese Vorgehensweise unter Verwendung von Metakanten wird erreicht, daß der Graph schrumpft und damit Suchtiefe für den Tiefensuchalgorithmus ausreicht, um kleine ungereinigte Flächenstücke innerhalb einer großen gereinigten Fläche aufzufinden und diese mit Hilfe von Metakanten zu verbinden. Dabei ist zu berücksichtigen, daß für die jeweiligen Metakanten gespeichert werden muß, welche Kanten des ursprünglichen Graphen sie beinhalten, damit im Anschluß, nachdem durch die Tiefensuche mit Hilfe der Metakanten ein Fahrweg gefunden wurde, die Bahn entlang dieser ursprünglichen Kanten des Graphen geplant werden kann. Falls der Graph dann nur noch aus einem Knoten besteht, kann davon ausgegangen werden, daß die Bearbeitungsfläche vollständig überfahren wurde und daß die Planung abgebrochen werden kann. Vorzugsweise wird zur Überprüfung der Flächenfüllung einer Raster verwendet. Hierzu wird die Bearbeitungsfläche durch ein Raster in Rasterflächen aufgeteilt und alle Rasterflächen werden zunächst als ungereinigt initialisiert. Für jede Kante existiert ein Bereich in dem Grid. Dieser Bereich ist die Fläche die von der Maschine bei Verwendung der entsprechenden Kante überfahren wird. Nun kann während der Planung berechnet werden, welcher Bereich überfahren wurde. Die zugehörigen Rasterzellen werden hierzu als gereinigt in einem Speicherfeld eingetragen. Man erhält dadurch zwei Zahlen, von denen eine die Gesamtzahl aller Rasterzellen bedeutet und die zweite die Anzahl der Zellen welche noch nicht gereinigt wurden. Aus diesen beiden Zahlen, läßt sich der Prozentsatz der bereits gereinigten Fläche ermitteln. Auch dieser Prozentsatz von bereits gereinigter Fläche kann als Abbruchkriterium für das Bahnplanungsverfahren verwendet werden.

Hinsichtlich der Kostenfunktion besteht eine größtmögliche Freiheit bei der Bewertung der einzelnen Kanten zur Verknüpfung dieser Kanten als zu planende Bahn. Beispielsweise auch wenn die Kostenfunktion jeder Kante einen Wert W zu, der die Kosten widerspiegelt, die aufgebracht werden müssen, um von einer Konfiguration K10 in eine Konfiguration K20 überzuwechseln. Zur Planung einer optimalen Bahn muß eine Zuordnung von Kosten zu allen Kanten des Graphen getroffen werden. Hierbei können die Kosten einer Kante von mehreren Faktoren abhängen. In diesem Fall setzen sich die Kosten beispielsweise aus mehreren Teilaspekten zusammen, welche bei den Kosten unterschiedlich gewichtet werden können. Einige Einflußfaktoren sind beispielsweise die Lage der Kanten, der Abstand zwischen zwei Konfigurationen, der möglichst niedrig gehalten werden soll, damit Ungenauigkeiten bei der Fahrt des Roboters nicht so stark zum Tragen kommen. Weiterhin kann der euklidische Abstand bzw. die kinematische Distanz bewertet werden, die zwischen zwei Konfigurationen die zu fahren sind, besteht. Bei der Berechnung der kinematischen Distanz werden zunächst um beide Konfigurationen jeweils zwei Kreise gelegt, wie dies Figur 8 mit C51 und C52, C71 und C72 zeigt, die den jeweiligen Konfigurationen K50 und K70 zugeordnet sind. Als Fahrrichtungen in diesen beiden Konfigurationen sind R50 und R70 angegeben. Der Radius dieser Kreise RAD wird dabei so berechnet, daß der maximale Lenkwinkel der mobilen Einheit ausgenutzt wird. Anschließend wird die kürzeste Verbindung der Konfigurationen anhand dieser Kreise berechnet, indem günstige Kreisabschnitte durch eine Strecke verbunden werden. Diese Teilkreise zwischen den Konfigurationen R50 und P100 und den Konfigurationen R70 und P200 und die zwischen P200 und P100. liegende Strecke bilden dann die kinematische Distanz. Als weiteres Kriterium kann das Verhältnis dieser beiden beschriebenen Distanzen gebildet werden, weil dieser Wert aussagt, wie groß der Lenkwinkel der mobilen Einheit sein muß, um die Folgekonfiguration zu erreichen. Bei einem Wert von 1 kann die mobile Einheit geradeausfahren, was selbstverständlich den günstigsten Fall darstellt. Ein weiterer wichtiger Aspekt bei der Bewertung von Kanten ist der Fortschritt bei der Flächenbearbeitung. Um diesen zu berechnen, wird ermittelt, wieviel Prozent der Kante bereits gereinigt ist. Je kleiner der Wert an dieser Stelle ist, desto größer ist der Nutzen, der bei Überfahrung dieser Kante erzielbar ist. All diese Kriterien oder Teile davon können vorzugsweise in der Bewertungsfunktion zur Berechnung der Kosten für eine Kante zusammengefaßt werden. Es sind jedoch auch abhängig vom Einsatzfall beliebige andere Kostenkriterien denkbar. Als Beispiele können der Energieverbrauch und -Vorrat, sowie der Reinigungsmittelvorrat und -Verbrauch etc. dienen

## Patentansprüche

1. Bahnplanungsverfahren für eine mobile Einheit für Flächenbearbeitung mit folgenden Merkmalen:
a) die Umrißlinie der Bearbeitungsfläche und mindestens die Umrißlinie eines zu umfahrenden Hindernisses (HIN) innerhalb der Bearbeitungsfläche ist in Form eines geschlossenen Linienzuges, der aus in Knickstellen (K) verbundenen geraden Linienstücken besteht, bekannt;
b) in Abhängigkeit von der Breite (b) eines an der mobilen Einheit (ME) angebrachten Flächenbearbeitungsgerätes werden im wesentlichen zu den Umrißlinien (HIN) parallele erste potentielle Bahnen (PB100) mit Bearbeitungsbreite (b) geplant, die es der mobilen Einheit (ME)gestatten das Flächenbearbeitungsgerät entlang des so entstehenden Bearbeitungsstreifens zwischen der ersten potentiellen Bahn (PB100) und der Umrißlinie (HIN) zu führen;
c) in einem weiteren Planungsschritt, werden zweite potentielle Bahnen (PB200) in gleicher Weise wie die ersten potentiellen Bahnen (PB100) mit den ersten potentiellen Bahnen (PB100) als'Umrißlinien (HIN) geplant;
d) die potentiellen Bahnen werden in Abhängigkeit von der Lage von Knickstellen (K) in den Umrißlinien (HIN) in potentielle Teilbahnstücke unterteilt, zwischen denen jeweils eine Manövriermarke (K11)vermerkt wird;
e) mindestens je zwei Manövriermarken (K22, K1) unmittelbar benachbarter potentieller Bahnen (PB100, PB200) werden durch potentielle Teilbahnstücke (211, 221) verbunden;
f) die Bahn wird aus aneinandergereihten potentiellen Teilbahnstücken geplant, indem diese mittels einer Kostenfunktion bewertet werden, in die mindestens eines der folgenden Kostenkriterien einfließt: Fahrbarkeitskriterium anhand der Kinematik der mobilen Einheit, Flächenkriterium anhand bereits überfahrenen Bearbeitungsstreifens in Relation zur gesamten Bearbeitungsfläche, Länge der potentiellen Teilbahn.

2. Verfahren nach Anspruch 1,
bei dem die Bearbeitungsfläche in ein Raster aufgeteilt wird und bezüglich der Flächenelemente des Rasters vermerkt wird, ob diese durch ein Teilbahnstück geschnitten werden, was als Flächenkriterium für Merkmal f) von Anspruch 1 dient.

3. Verfahren nach einem der vorangehenden Ansprüche,
bei dem bei der Planung von potentiellen Bahnen als Planungskriterium der Abstand zu einer anderen Umrißlinie überprüft wird und lediglich falls dieser größer als die Bearbeitungsbreite (b) ist, die potentielle Bahn geplant wird.

4. Verfahren nach Anspruch 3,
bei dem solange potentielle Bahnen geplant werden, bis das Planungskriterium nicht mehr erfüllt wird.

5. Verfahren nach einem der vorangehenden Ansprüche,
bei dem einer Teilbahn eine Fahrtrichtung für die mobile Einheit (ME) vorgegeben wird und bei der Bewertung durch die Kostenfunktion die Einhaltung der Fahrtrichtung in Verbindung mit der Kinematik der mobilen Einheit(ME) bewertet wird.

6. Verfahren nach einem der vorangehenden Ansprüche,
bei dem die potentiellen Bahnen mit potentiellen Teilbahnstücken wie folgt erzeugt werden:
a) die Länge der Linienstücke der Umrißlinie (HIN) wird beibehalten und entspricht einem potentiellen Teilbahnstück an dessen Endpunkten Manövriermarken (K1, K3) vermerkt werden;
b) ein jeweiliges Teilbahnstück wird im wesentlichen senkrecht zur Umrißlinie um den Betrag der Bearbeitungsbreite (b) verschoben;
c) jene Manövriermarken von potentiellen Teilbahnstücken, die vor ihrer Verschiebung eine Knickstelle der Umrißlinie gebildet haben, werden durch ein weiteres potentielles Teilbahnstück (34)miteinander verbunden.

7. Verfahren nach einem der vorangehenden Ansprüche,
bei dem ein Graph erzeugt wird, wobei die potentiellen Teilbahnstücke als Kanten des Graphen und die Manövriermarken als Knoten des Graphen dienen.

8. Verfahren nach Anspruch 7,
bei dem überfahrene Kanten als gereinigt vermerkt werden und falls von einem zwischen diesen Kanten befindlichen Knoten keine ungereinigte Kante abgeht zu einer Metakante zusammengefaßt werden, um bei konstanter Suchtiefe den gesamten Graphen evaluieren zu können.

9. Verfahren nach Anspruch 7 oder 8,
bei dem die Bewertung mittels eines bekannten Graphenalgorithmus durchgeführt wird.

10. Verfahren nach Anspruch 9,
bei dem als bekannter Graphenalgorithmus die Tiefensuche, oder die bewertete Tiefensuche verwendet wird.

11. Verfahren nach einem der vorangehenden Ansprüche,
bei dem Manövriermarken in Form einer Konfiguration als Referenzmarke an der mobilen Einheit (ME) und deren Ausrichtung verwendet werden.

## Claims

1. Path planning process for a mobile surface treatment unit, having the following features:
a) the outline of the surface to be treated and at least the outline of an obstacle (HIN) to be circumnavigated within the surface to be treated is known in the form of a closed series of lines, which comprises straight line sections joined at turning points (K);
b) depending on the width (b) of a surface treatment appliance fitted to the mobile unit (ME), first potential paths (PB100) substantially parallel to the outlines (HIN) and with a treatment width (b) are planned, which permit the mobile unit (ME) to guide the surface treatment appliance along the treatment strip produced in this way between the first potential path (PB100) and the outline (HIN) ;
c) in a further planning step, second potential paths (PB200) are planned in the same way as the first potential paths (PB100), using the first potential paths (PB100) as outlines (HIN);
d) depending on the position of turning points (K) in the outlines (HIN), the potential paths are subdivided into potential path subsections, between which a manoeuvring mark (K11) is flagged in each case;
e) in each case at least two manoeuvring marks (K22, K1) of immediately adjacent potential paths (PB100, PB200) are joined by potential path subsections (211, 221);
f) the path is planned from potential path subsections lined up in a row, by the latter being assessed by a cost function which incorporates at least one of the following cost criteria: feasibility of travel criterion on the basis of the kinematics of the mobile unit, surface criterion on the basis of treatment strips already covered in relation to the total surface to be treated, length of the potential part-path.

2. Process according to Claim 1, in which the surface to be treated is divided into a grid and is flagged, with respect to the elements of the area of the grid, as to whether these are intersected by a path subsection, which is used as a surface criterion for feature f) from Claim 1.

3. Process according to one of the preceding claims, in which, during the planning of potential paths, as a planning criterion, the distance to another outline is checked and the potential path is planned only if this distance is greater than the treatment. width (b).

4. Process according to Claim 3, in which potential paths are planned until the planning criterion is no longer satisfied.

5. Process according to one of the preceding claims, in which a part-path is predefined a direction of travel for the mobile unit (ME) and, during the assessment by the cost function, compliance with the direction of travel is assessed in connection with the kinematics of the mobile unit (ME).

6. Process according to one of the preceding claims, in which the potential paths with potential path subsections are produced as follows:
a) the length of the line sections of the outline (HIN) is maintained and corresponds to a potential path subsection at whose end points manoeuvring marks (K1, K3) are flagged;
b) a respective path subsection is shifted substantially perpendicular to the outline by the magnitude of the treatment width (b);
c) those manoeuvring marks of potential path subsections which formed a turning point of the outline before they were shifted are joined to one another by a further potential path subsection (34).

7. Process according to one of the preceding claims, in which a graph is produced, the potential path subsections being used as the edges of the graph and the manoeuvring marks as nodes on the graph.

8. Process according to Claim 7, in which edges which have been travelled over are flagged as clean and, if no uncleaned edge originates from a node located between these edges, are combined to form a meta-edge, in order to make it possible to evaluate the entire graph with a constant search depth.

9. Process according to Claim 7 or 8, in which the assessment is carried out by means of a known graph algorithm.

10. Process according to Claim 9, in which the known graph algorithm used is the depth-first search, or the assessed depth-first search.

11. Process according to one of the preceding claims, in which manoeuvring marks in the form of a configuration as a reference mark on the mobile unit (ME) and its alignment.are used.

## Revendications

1. Procédé pour planifier le parcours d'une unité mobile de traitement de surfaces avec les caractéristiques suivantes:
a) le contour de la surface à traiter et, au moins, le contour (HIN) d'un obstacle, que l'on veut contourner à l'intérieur de la surface à traiter, est connu sous forme de contour polygonal fermé composé de segments de droites reliés entre eux aux sommets des angles (K) du polygone;
b) en fonction de la largeur (b) d'un appareil de traitement de surface monté sur l'unité, mobile (ME), on planifie des premiers trajets potentiels (PB100), essentiellement parallèles aux côtés du contour (HIN), avec une largeur de traitement (b), qui permettent à l'unité mobile (ME) de guider l'appareil de traitement de surface le long de la bande de traitement, qui apparaît ainsi entre le premier trajet potentiel (PB100) et le contour (HIN);
c) au cours d'une étape suivante de planification, on planifie, de la même manière que les premiers trajets potentiels (PB100), des deuxièmes trajets potentiels (PB200) avec les premiers trajets potentiels (PB100) comme contours (HIN);
d) en fonction de la position des sommets des angles (K) du polygone dans les contours (HIN), les trajets potentiels sont divisés en segments partiels de trajets potentiels, entre chacun desquels on place un repère de manoeuvre (K11);
e) au moins deux repères de manoeuvre (K22, K1) de trajets potentiels (PB100, PB200) immédiatement voisins sont reliés par des segments partiels de trajets potentiels (211, 221);
f) le parcours est planifié à partir de segments partiels de trajets potentiels ajoutés les uns aux autres, en les analysant au moyen d'une fonction de coûts, dans laquelle entre au moins un des critères de coûts suivants:
critère de praticabilité sur la base de la cinématique de l'unité mobile, critère de surface sur la base des bandes de traitement, qui ont déjà été parcourues, en relation avec la totalité de la surface à traiter, longueur des trajets potentiels partiels.

2. Procédé selon la revendication 1
au cours duquel la surface à traiter est divisée par un quadrillage et au cours duquel on repère si les éléments de surface du quadrillage sont ou non traversés par un segment de trajet partiel, ce qui sert de critère de surface pour la caractéristique f) de la revendication 1.

3. Procédé selon l'une des revendications précédentes
au cours duquel, lors de la planification de trajets potentiels, on vérifie, en tant que critère de planification, la distance par rapporta un autre contour et au cours duquel on ne planifie le parcours potentiel que si cette distance est plus grande que la largeur de traitement (b).

4. Procédé selon la revendication 3
au cours duquel des trajets potentiels sont planifiés jusqu'à ce que le critère de planification n'est plus satisfait.

5. Procédé selon l'une des revendications précédentes
au cours duquel on prescrit à un trajet partiel une direction de déplacement pour l'unité mobile (ME) et au cours duquel, lors de l'analyse par la fonction: des coûts, on analyse le maintien de la direction de déplacement en relation avec la cinématique de l'unité mobile (ME).

6. Procédé selon l'une des revendications précédentes
au cours duquel les trajets potentiels sont générés comme suit avec des trajets potentiels partiels:
a) la longueur des segments du contour (HIN) est conservée et correspond à un trajet potentiel partiel aux extrémités duquel on mémorise des repères de manoeuvre (K1, K3);
b) chaque trajet potentiel partiel est essentiellement déplacé perpendiculairement au contour d'une valeur correspondant à la largeur de traitement (b);
c) les repères de manoeuvre de trajets potentiels partiels, qui formaient le sommet d'un angle du contour avant leur déplacement, sont reliés entre eux par un trajet potentiel partiel supplémentaire (34).

7. Procédé selon l'une des revendications précédentes
au cours duquel on génère un graphe, les trajets potentiels partiels servant de côtés du graphe et les repères de manoeuvre, de noeuds du graphe.

8. Procédé selon la revendication 7
au cours duquel les côtés, qui ont été parcourus, sont repérés comme nettoyés et, au cours duquel, si aucun côté non nettoyé ne part d'un noeud qui se trouve entre ces côtés, ceux-ci sont réunis pour former un métacôté pour pouvoir évaluer l'ensemble du graphe avec une profondeur de recherche constante.

9. Procédé selon la revendication 7 ou 8
au cours duquel l'analyse est effectuée au moyen d'un algorithme de graphe connu.

10. Procédé selon la revendication 9
au cours duquel on utilise, comme algorithme de graphe connu, la recherche profonde ou la recherche profonde pondérée.

11. Procédé selon l'une des revendications précédentes
au cours duquel on utilise des repères de manoeuvre, sous forme d'une configuration, en tant que repère de référence sur l'unité mobile (ME) et leur orientation.
